# EUROPEAN PATENT SPECIFICATION

(11) **EP 1 212 237 B1**
(45) Date of publication and mention of the grant of the patent: **25.08.2004**
(21) Application number: 99939880.3
(22) Date of filing: 11.08.1999
(51) Int. Cl.: B63H 23/30, F16D 27/112, F16D 3/68

(54) **COMBINED CLUTCH AND TORSION DAMPER FOR WATER JET PROPULSION**
KOMBINATION AUS KUPPLUNG UND DREHSCHWINGUNGSDÄMPFER FÜR EINEN WASSERSTRAHLANTRIEB
EMBRAYAGE ET AMORTISSEUR DE TORSION COMBINES POUR PROPULSION A JET D'EAU

(43) Date of publication of application: 12.06.2002
(73) Proprietor: Lauterbach, Joachim, Port Coquitlam, British Columbia V3C 6L4 (CA)
(72) Inventor: Lauterbach, Joachim, Port Coquitlam, British Columbia V3C 6L4 (CA)
(74) Representative: Ehlers, Jochen
(86) International application number: PCT/CA1999/000793
(87) International publication number: WO 2001/012504

(56) References cited:
- EP-A- 0 460 373
- DE-U- 29 812 409
- US-A- 3 868 833
- US-A- 4 031 714
- US-A- 4 793 455
- US-A- 5 609 232
- US-A- 5 655 968
- US-A- 5 720 635
- US-A- 5 954 552

## Description

### Field of the Invention

The present invention relates to a water jet propulsion system for boats, more specifically, to an electromagnetic clutch with a built-in torsion damper for use with a water jet propulsion system.

### Background of the Invention

Water jet boats generally have their water jet impellers connected directly to a motor via a torsion damper combined with a universal joint, or a separate torsion damper and a constant velocity universal joint. Such a system permits the motor to be placed as close as possible to the water jet impeller, thus positioning the motor as far back as possible in the boat. It is preferred to have the motor as close to the stern as possible.

One problem that has always existed with water jet propulsion systems is to keep a boat in a stationary position without shutting off the motor or to clean out the jet intake without shutting off the motor. One solution to this problem is to install a transmission between the impeller and the motor to achieve a neutral position wherein the motor can be warmed up when at anchor or in a marina without creating a water disturbance. This system is also useful when performing tune-ups or checking a high idle, which cannot be done with a direct connection between the impeller and the motor. The transmission system also permits the motor to be used for alternative work such as a front engine power take-off for a generator and the like. Water jets do not need to have a reverse thrust propulsion since the jets have thrust deflectors which are placed at the jet exits to control the direction of water flow or thrust. These deflectors act as a brake for decelerating a boat quickly and also permit reversing a boat when needed.

In most transmissions the input shaft and the output shaft are not in line so the motor has to be mounted in a different position in the boat and this is especially true when a water jet boat is retrofitted with a transmission. Furthermore, a transmission takes up considerably more space and therefore the motor must be placed further towards the bow of the boat which can effect the planing action of a boat. Most water jet impellers are rotated at motor output speed, therefore the transmission has to have a one-to-one ratio which is not a standard transmission and by having a ratio other than one-to-one, the impeller performance is negatively effected. Furthermore, the transmission adds extra weight and requires the presence of oil and oil filters, oil coolers, and raw water heat exchangers to cool oil in the transmission. Also oil temperature and pressure sensors are required together with a mechanical morse cable control to shift the transmission. Furthermore, even a one-to-one transmission has an efficiency loss of from 5% to 10%.

A torsion damper is required between a motor and a water jet impeller to avoid shock and vibration. Motors are generally mounted in a boat on resilient mountings and therefore the torsion damper prevents motor vibration being transferred through to the drive shaft of the impeller and through the impeller bearings to the boat. Universal joints or constant velocity joints take into account movement of a motor on resilient mountings in the boat and provision is made for some slip to occur between the water jet impeller and the motor to allow the engine some freedom of movement in a longitudinal direction. A combined clutch and torsion clamper according to the preamble of claim 1 is known from DE-U-29812409.

### Summary of the Invention

The present invention provides an electromagnetic clutch with a built-in torsion damper for installation between a water jet impeller and a motor. In one embodiment the combined clutch and torsion damper has a slip joint connection for connecting to a universal joint joined to an impeller drive shaft. In another embodiment there is provided a mechanical safety lock to lock the clutch in the event of an electrical failure, or in the event excessive slippage occurs due to wear in the clutch. The combined clutch and torsion damper are compact and lightweight to permit the motor to be mounted as close as possible to the water jet impeller.

The present invention provides a combined clutch and torsion damper for a water jet propulsion system as claimed in claim 1 comprising an outer ring housing having attachment to a motor; an inner housing, concentric and within the outer ring housing, rotatably mounted on a hollow central shaft; resilient torque transmitting connector members positioned between the inner housing and the outer housing to dampen rotational forces transmitted from the outer housing to the inner housing; an electromagnetic clutch positioned between the inner housing and a clutch ring concentrically mounted on the central shaft, and a slip joint connection within the central shaft, to a water jet impeller shaft, preferably via a universal joint.

### Brief Description of the Drawings

In drawings which illustrate embodiments of the present invention,
Figure 1 is a cross-sectional view showing one embodiment of a combined clutch and torsion damper according to the present invention with a universal joint connection to an impeller shaft,
Figure **2** is an end view with partial cross-sectional views showing the combined clutch and torsion damper of Figure **1,**
Figure **3** is an axial cross-sectional view showing an inner housing of the combined clutch and torsion damper of Figure **1**,
Figure **4** is a left end view showing the inner housing taken at ←4 of Figure **3**,
Figure **5** is a right end view showing the inner housing taken at →5 of Figure **3,**
Figure **6** is an axial cross-sectional view showing an outer ring housing of the combined clutch and torsion damper of Figure **1,**
Figure **7** is a right end view showing the outer ring housing taken at ←7 of Figure **6,**
Figure **8** is a cross-sectional detail showing a resilient torque transmitting connector member for the combined clutch and torsion damper of Figure **1**,
Figure **9** is a side view showing an optional splined flange shaft to fit within a central shaft of the combined clutch and torsion damper of Figure **1.**

### Description of the Preferred Embodiment

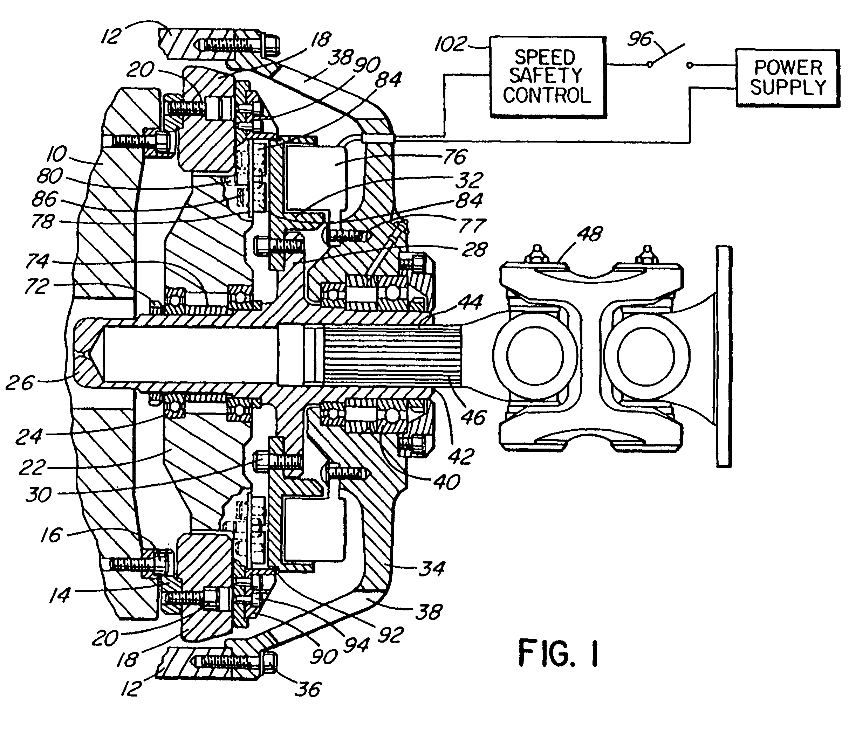

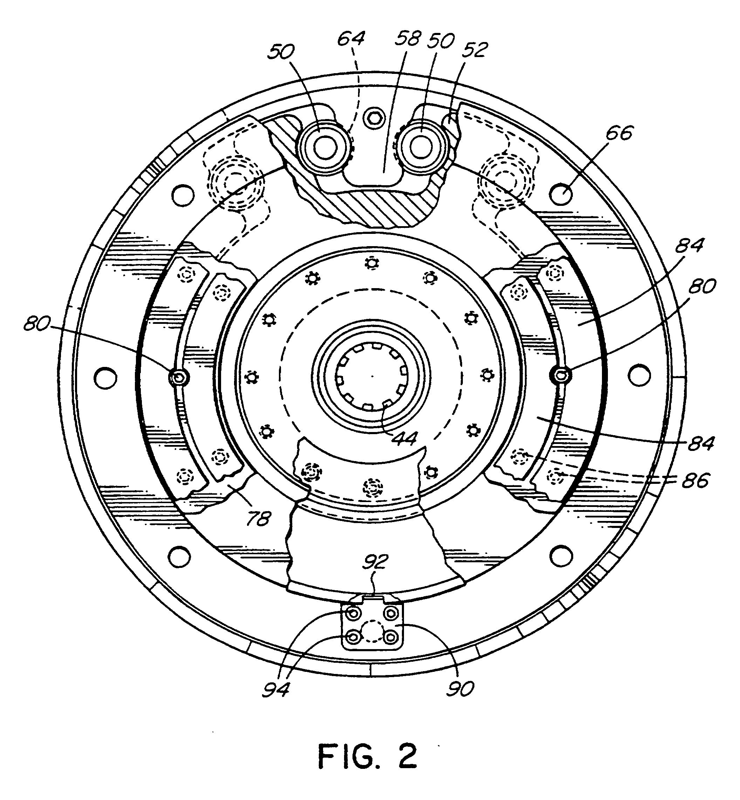

A combined clutch and torsion damper is shown in Figures **1** and **2** wherein the flywheel **10** of a motor rotates within a motor housing **12.** An adaptor ring **14** is shown attached to the flywheel **10** by machine screws **16** and has an outer ring housing **18** attached to the adaptor ring **14** by means of machine screws **20**. In some cases the adaptor ring **14** may be omitted and the outer ring housing **18** attaches directly to the flywheel **10**. Inside the outer ring housing **18** and concentric therewith is an inner housing **22** mounted on sealed antifriction bearings **24** to a hollow central shaft **26**. The central shaft **26** is case hardened steel and is hollow to reduce weight. Because the shaft **26** is hollow, more air is able to circulate which assists in cooling the clutch and torsion damper assembly. The shaft **26** has a flange **28** which has machine bolts **30** joining the flange **28** to a clutch ring **32**. A bell housing **34** connects to the motor housing **12** by machine bolts **36** and has access holes **38** with covers (not shown) for inserting mechanical safety locks as will be described hereafter. The bell housing **34** has sealed bearings **40** mounted on a forward end **42** of the central shaft **26**. An interior spline connection **44** is provided at the end of the central shaft **26** and shown fitted therein is a spline shaft **46** of a universal joint **48**.

Resilient torque transmitting connector members **50**, as shown in Figure **2**, are substantially cylindrical made from urethane and are oil and chemical resistant as well as being heat resistant up to 230°F (110°C). These connector members **50** are positioned between the inner housing **22** and the outer housing **18** to dampen rotational forces transmitted from the outer housing **18** to the inner housing **22.**

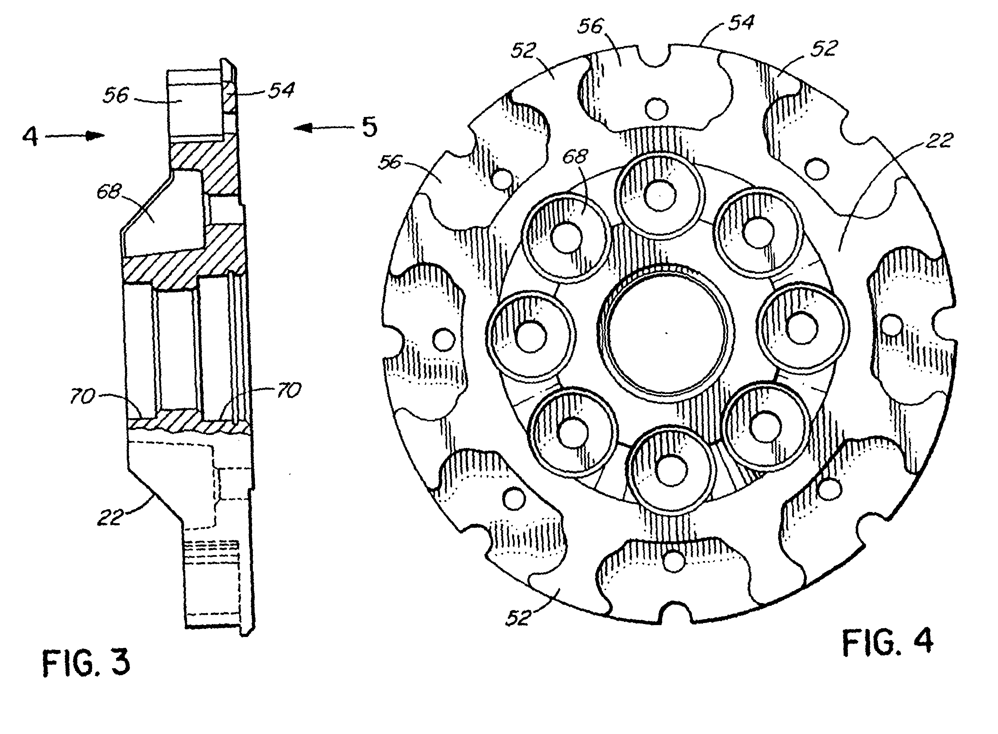

The inner housing **22** is shown in Figures **3, 4** and **5** and has outward projecting shoulders **52** with curved radial surfaces curved to the diameter of the connector members **50** as shown in Figure **2**.

A peripheral disc **54** extends on the outside of the inner housing **22** and in combination with the outward projecting shoulders **52** provide inner location sites **56** for the connector members **50.**

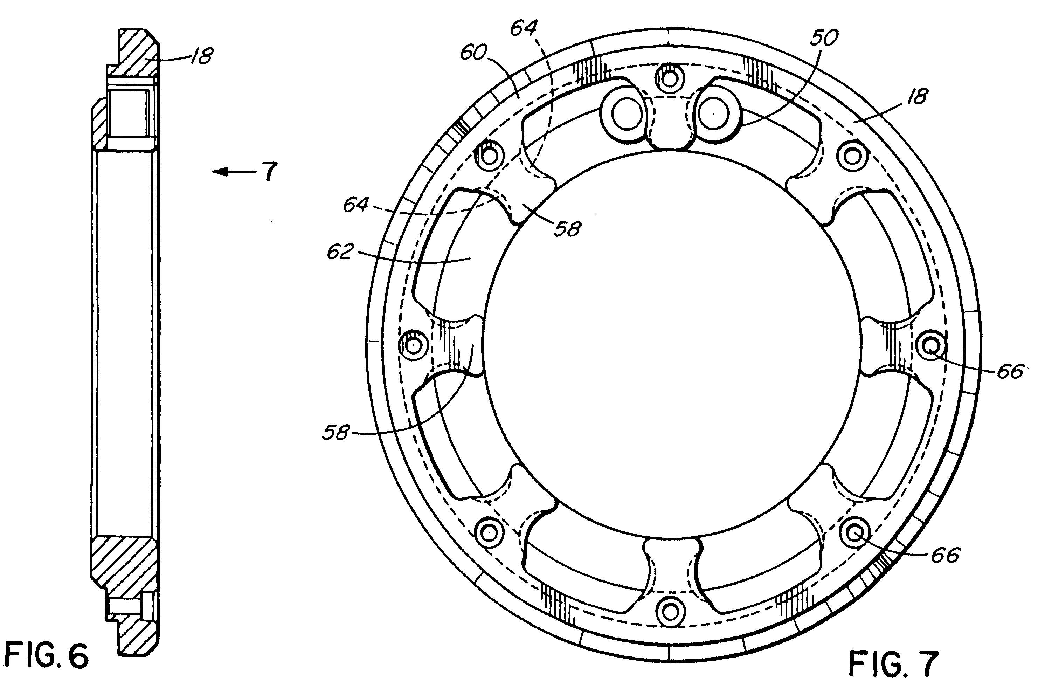

The outer housing **18** is shown in Figures **6** and **7** and has inward projecting shoulders **58** which project inwards from an external ring **60** providing outer location sites **62** to retain the resilient connector members **50** and also the outward projecting shoulders **52** of the inner housing **22.** Recesses **64** in the inward projecting shoulders **58** retain the resilient members **50** in place. Details of the connector members **50** are shown in Figure **8**. The connector **50** is cylindrical with frusto-conical indents on each end. Rotational forces are transmitted from the inward projecting shoulders **58** of the outer housing **18** through the connector members **50** to the outward projecting shoulders **52** of the inner housing **22**. If the connector members **50** should fail or disintegrate, then the inward projecting shoulders **58** contact the outward projecting shoulders **52** and the rotational forces are transmitted without any damping effect. The size and hardness of the urethane connector members **50** are designed to match the torque transmitted from the motor.

Countersunk holes **66** in the inward projecting shoulders **58** of the outer housing **18** are used for machine screws **20** to hold the outer housing **18** to the adaptor ring **14,** or if no adaptor ring is used to the flywheel **10**. Both the inner housing **22** and the outer housing **18** are made of aluminum alloy. In one embodiment the units are cast. Lightening holes **68** are shown in the inner housing **22** to reduce the weight to a minimum. The inner housing has bearing seats **70** for the bearings **24,** as shown in Figure **1**. The attachment of the inner housing **22** to the central shaft **26** is by the known method of locknut **72** and spacer **74**, as shown in Figure **1**.

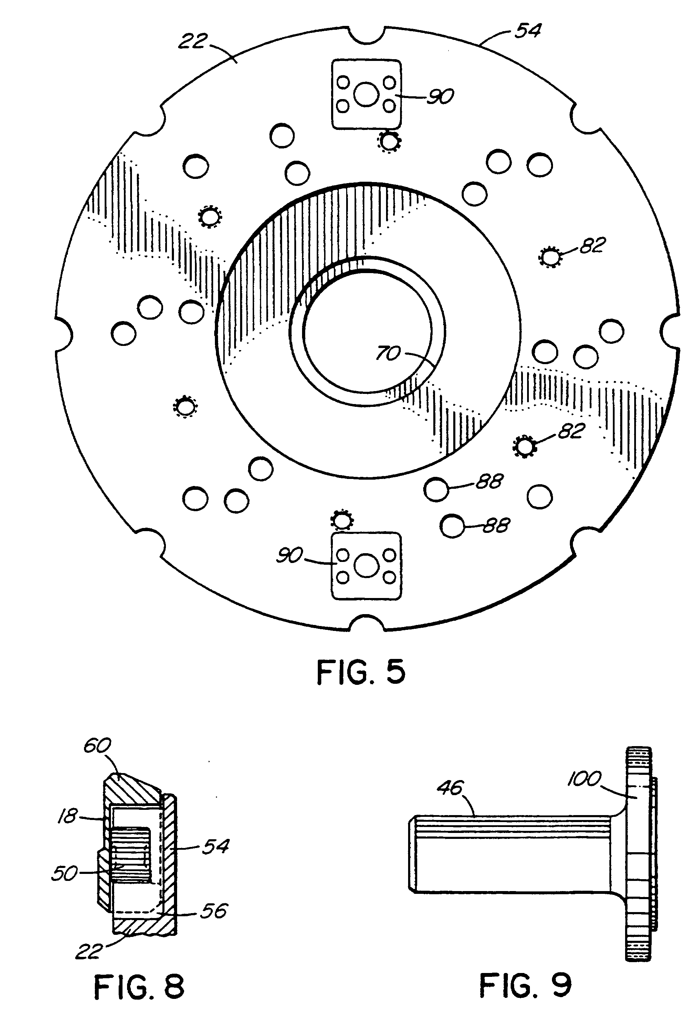

The electromagnetic clutch has an electrical coil **76** which is fixed to the bell housing **34** by means of machine bolts **77**. The coil is located within the clutch ring **32** and when the coil is energized the clutch ring **32** becomes magnetic. On the inner housing **22** there is mounted a thin brass disc **78** held by machine screws **80** which fit into tapped holes **82** as shown in Figure **5**. Two ferrous magnetic rings **84** are attached to the brass disc **78** by means of machine screws **86** positioned midway between the attachment screws **80** holding the brass disc **78** to the inner housing **22**. Thus, when the coil **76** is energized the clutch ring **32** becomes magnetic which makes contact with the ferrous magnetic rings **84**. The brass disc **78** flexes permitting contact to be made and the rotational forces from the inner housing **22** are transferred to the clutch ring **32** and to the central shaft **26.**

A separate lightweight titanium lockplate **90** is shown in Figures **1** and **2** engaging in a slot **92** provided in the periphery of the clutch ring **32.** The titanium lockplates **90** are lightweight and two are provided. They are positioned to ensure that the combined clutch and torsion damper always remain rotationally balanced. The lockplates **90** are attached to the rim **54** of the inner housing **22** by means of four machine bolts **94**. The lockplates **90** are inserted through the apertures **38** in the bell housing **34**, and attached to the inner housing **22** by the bolts **94**. The bell housing **34** is preferably made out of aluminum alloy to reduce the weight of the unit.

In operation the clutch is activated by a switch **96,** generally positioned in the dashboard of the boat, the switch **96** provides power from a power supply in the boat, generally 12V or 24V. The clutch engages pulling the two ferrous magnetic rings **84** to make contact with the magnetic clutch ring **32**. Power is transmitted from a motor which may be any suitable power source; a diesel, gasoline, propane, or natural gas, combustion engine, a jet turbine or even an electric motor. The flywheel **10** rotates the outer housing **18** through the adaptor ring **14** if provided, and through the torsion damper to the inner ring **22** and hence by the clutch mechanism to the drive shaft **28**. The spline shaft **46** may move longitudinally within the internal spline **44** of the central shaft **26**. In one embodiment the spline shaft **46** of the universal joint **48** may be replaced by a spline shaft **46** connected to a flange **100**, as shown in Figure **9**.

In another embodiment an electronic speed control **102** is provided in the electrical circuit. The control is a safety device which does not allow the clutch to be engaged above 1,000 rpm shaft speed. This safety device helps eliminate excess wear on the electromagnetic friction plates of the clutch.

In one embodiment a combined clutch and torsion damper is connected to a 350 hp motor and provides a spatial distance of 11½" (30cm) between the drive shaft and the motor. This dimension is less than the spatial distance for a commercially available torsion damper with a universal joint. The weight of the combined clutch and torsion damper is 10 lbs (4.5 kg) less than the commercially available torsion damper with a universal joint. Different sizes of combined clutch and torsion damper may be made for different capacity motors and power sources. The clutch may easily be disengaged by simply throwing the switch 96 and the motor then rotates without the impeller shaft rotating. Longitudinal movement between the motor and the jet propulsion impeller can occur because the spline shaft **46** can slide in the internal spline **44** of the central shaft **26**.

In one embodiment the clutch mechanism is a STOMAG™ clutch adapted for the existing combined clutch and torsion damper of the present invention.

Various changes may be made to the embodiments shown herein without departing from the scope of the present invention which is limited only by the following claims.

## Claims

1. A combined clutch and torsion damper for a water jet propulsion system comprising:
an outer ring housing (18) having attachment to a motor;
an inner housing (22), concentric and within the outer ring housing (18), rotatably mounted on a hollow central shaft (26);
resilient torque transmitting connector members (50) positioned between the inner housing (22) and the outer housing (18) to dampen rotational forces transmitted from the outer housing (18) to the inner housing (22);
an electromagnetic clutch positioned between the inner housing (22) and a clutch ring (32) concentrically mounted on the central shaft (26), and
further **characterized by**
a slip joint connection within the central shaft (26), to a water jet impeller shaft.

2. The combined clutch and torsion damper according to claim 1 wherein the slip joint connection within the central shaft (26) connects to the water jet impeller shaft via a universal joint (48).

3. The combined clutch and torsion damper according to claim 2 wherein the slip joint connection comprises an interior spline output connection (44) in the central shaft (26).

4. The combined clutch and torsion damper according to claim 2 wherein the outer ring housing (18) is connected to a flywheel (10) of a motor. ,

5. The combined clutch and torsion damper according to claim 4 including an adaptor ring (14) between the flywheel (10) and the outer ring housing (18) to accommodate different sizes of flywheel (10).

6. The combined clutch and torsion damper according to claim 2 wherein the torsion damper comprises substantially cylindrical resilient connector members (50), the connector members (50) positioned between inward projecting shoulders (58) from the outer housing (18) and outward projecting shoulders (52) from the inner housing (22), the inner projecting shoulders (58) engaging the outward projecting shoulders (52) in the event of the connector members (50) failing.

7. The combined clutch and torsion damper according to claim 6 wherein the connector members (50) are made from urethane which is oil resistant, chemical resistant and heat resistant to 230.degree. F. (110.degree. C.).

8. The combined clutch and torsion damper accordir g to claim 2 wherein the outer ring housing (18) and the inner housing (22) are formed from aluminum alloy.

9. The combined clutch and torsion damper according to claim 2 including manual locks to lock the clutch ring (32) to the inner housing (22) and retain rotational balance.

10. The combined clutch and torsion damper according to claim 9 wherein the manual locks comprise titanium plates (90).

11. The combined clutch and torsion damper according to claim 9 including a bell housing (34) having a bearing stop-port for the central shaft (26), the bell housing (34) having at least one maintenance access (38) for inserting the manual locks.

12. The combined clutch and torsion damper according to claim 11 wherein a magnetic coil (76) is attached to the bell housing (34) to magnetize the clutch ring (32).

13. The combined clutch and torsion damper according to claim 2 wherein the central shaft (26) is hollow and formed of case hardened steel.

14. The combined clutch and torsion damper according to claim 2 including an electronically controlled safety device (102) to prevent the clutch being engaged above 1,000 rpm.

## Patentansprüche

1. Kombinierte Kupplung und Drehschwingungsdämpfer für ein Wasserstrahlantriebssystem, folgendes umfassend:
ein Außenringgehäuse (18), welches eine Befestigung an einem Motor aufweist;
ein Innengehäuse (22), welches konzentrisch und innerhalb des Außenringgehäuses (18) angeordnet ist und an einer hohlen Hauptwelle (26) drehbar befestigt ist;
elastische drehmomentübertragende Verbindungselemente (50), die zwischen dem Innengehäuse (22) und dem Außengehäuse (18) eingerichtet sind, um Rotationskräfte zu dämpfen, die von dem Außengehäuse (18) auf das Innengehäuse (22) übertragen werden;
eine elektromagnetische Kupplung, die zwischen dem Innengehäuse (22) und einem Kupplungsring (32) eingerichtet ist, wobei diese konzentrisch auf der Hauptwelle (26) befestigt ist, und
die ferner **gekennzeichnet ist, durch**
eine Rutschkupplungs-Verbindung innerhalb der Hauptwelle (26) zur Verbindung mit einer Wasserstrahl-Impellerwelle.

2. Kombinierte Kupplung und Drehschwingungsdämpfer nach Anspruch 1, wobei die Rutschkupplungs-Verbindung innerhalb der Hauptwelle (26) über ein Universalgelenk (48) mit der Wasserstrahl-Impellerwelle verbindet.

3. Kombinierte Kupplung und Drehschwingungsdämpfer nach Anspruch 2, wobei die Rutschkupplungs-Verbindung eine Zahnnabenprofil-Ausgangsverbindung (44) in der Hauptwelle (26) umfasst.

4. Kombinierte Kupplung und Drehschwingungsdämpfer nach Anspruch 2, wobei das Außenringgehäuse (18) mit einem Schwungrad (10) eines Motors verbunden ist.

5. Kombinierte Kupplung und Drehschwingungsdämpfer nach Anspruch 4, welche einen Adapterring (14) zwischen dem Schwungrad (10) und dem Außenringgehäuse (18) einschließt, um verschiedene Größen von Schwungrädern (10) unterzubringen.

6. Kombination aus Kupplung und Drehschwingungsdämpfer nach Anspruch 2, wobei der Drehschwingungsdämpfer im Wesentlichen zylindrische elastische Verbindungselemente (50) umfasst, wobei die Verbindungselemente (50) zwischen von dem Außengehäuse (18) nach innen vorstehenden Ansätzen (58) und von dem Innengehäuse (22) nach außen vorstehenden Ansätzen (52) eingerichtet sind, wobei die nach innen vorstehenden Ansätze (58) im dem Fall, in dem die Verbindungselemente (50) versagen, in die nach außen vorstehenden Ansätze (52) eingreifen.

7. Kombinierte Kupplung und Drehschwingungsdämpfer nach Anspruch 6, wobei die Verbindungselemente (50) aus Urethan gebildet sind, welches einen gegen Öl, Chemikalien und Hitze bis zu 230° F (110° C) beständigen Zustand aufweist.

8. Kombinierte Kupplung und Drehschwingungsdämpfer nach Anspruch 2, wobei das Außenringgehäuse (18) und das Innengehäuse (22) aus einer Aluminiumlegierung gebildet sind.

9. Kombinierte Kupplung und Drehschwingungsdämpfer nach Anspruch 2, welche manuelle Arretierungen einschließt, um den Kupplungsring (32) an dem Innengehäuse (22) festzusetzen und Rotationsgleichgewicht zu bewahren.

10. Kombinierte Kupplung und Drehschwingungsdämpfer nach Anspruch 9, wobei die manuellen Arretierungen Titanplatten (90) umfassen.

11. Kombinierte Kupplung und Drehschwingungsdämpfer nach Anspruch 9, welche ein glockenförmiges Gehäuse (34) einschließt, das eine Auflagerung für die Hauptwelle (26) aufweist, wobei das glockenförmige Gehäuse (34) zumindest einen Wartungszugang (38) zum Einführen der manuellen Arretierungen aufweist.

12. Kombinierte Kupplung und Drehschwingungsdämpfer nach Anspruch 11, wobei eine Magnetspule (76) an dem glockenförmigen Gehäuse (34) befestigt ist, um den Kupplungsring (32) zu magnetisieren.

13. Kombinierte Kupplung und Drehschwingungsdämpfer nach Anspruch 2, wobei die Hauptwelle (26) hohl ist und aus einsatzgehärtetem Stahl gebildet ist.

14. Kombinierte Kupplung und Drehschwingungsdämpfer nach Anspruch 2, welche eine elektronisch gesteuerte Sicherungsvorrichtung (102) einschließt, um zu verhindern, dass die Kupplung bei über 1.000 rpm in Eingriff gebracht wird.

## Revendications

1. Embrayage et amortisseur de torsion combinés pour un système de propulsion à jet d'eau comprenant :
un logement de segment externe (18) ayant une fixation sur un moteur ;
un logement interne (22), concentrique et à l'intérieur du logement de segment externe (18), monté de façon rotative sur un arbre central creux (26) ;
des éléments connecteurs de transmission de couple élastiques (50) positionnés entre le logement interne (22) et le logement externe (18) pour amortir les forces de rotation transmises depuis le logement externe (18) jusqu'au logement interne (22) ;
un embrayage électromagnétique positionné entre le logement interne (22) et une bague de synchroniseur (32) monté de façon concentrique sur l'arbre central (26), et
**caractérisé en outre par**
un raccordement à joint coulissant à l'intérieur de l'arbre central (26) par rapport à un arbre de l'impulseur à jet d'eau.

2. Embrayage et amortisseur de torsion combinés selon la revendication 1, dans lesquels le raccordement à joint coulissant à l'intérieur de l'arbre central (26) se raccorde à l'arbre de l'impulseur à jet d'eau via un joint universel (48).

3. Embrayage et amortisseur de torsion combinés selon la revendication 2, dans lesquels le raccordement à joint coulissant comprend une connexion de sortie de cannelure intérieure (44) dans l'arbre central (26).

4. Embrayage et amortisseur de torsion combinés selon la revendication 2, dans lesquels le logement de segment externe (18) est raccordé à un volant (10) du moteur.

5. Embrayage et amortisseur de torsion combinés selon la revendication 4 comprenant un segment de l'adaptateur (14) entre le volant (10) et le logement de segment externe (18) afin de recevoir différentes tailles de volant (10).

6. Embrayage et amortisseur de torsion combinés selon la revendication 2, dans lesquels l'amortisseur de torsion comprend sensiblement des éléments connecteurs élastiques cylindriques (50), les éléments connecteurs (50) étant positionnés entre les épaulements se projetant vers l'intérieur (58) depuis le logement externe (18) et les épaulements se projetant vers l'extérieur (52) depuis le logement interne (22), lesquels épaulements se projetant vers l'intérieur (58) engrenant les épaulements se projetant vers l'extérieur (52) en cas de panne des éléments connecteurs (50).

7. Embrayage et amortisseur de torsion combinés selon la revendication 6, dans lesquels les éléments connecteurs (50) sont faits en uréthane qui est résistant aux huiles, aux agents chimiques et à la chaleur jusqu'à 230 degrés Fahrenheit (110 °C).

8. Embrayage et amortisseur de torsion combinés selon la revendication 2, dans lesquels le logement de segment externe (18) et le logement interne (22) sont formés à partir d'alliage d'aluminium.

9. Embrayage et amortisseur de torsion combinés selon la revendication 2 comprenant des verrouillages manuels afin de verrouiller la bague de synchroniseur (32) sur le logement interne (22) et de retenir l'équilibre par rotation.

10. Embrayage et amortisseur de torsion combinés selon la revendication 9, dans lesquels les verrouillages manuels comprennent des plaques en titane (90).

11. Embrayage et amortisseur de torsion combinés selon la revendication 9 comprenant un carter fixe d'embrayage (34) ayant un support d'appui pour l'arbre central (26), le carter fixe d'embrayage (34) ayant au moins un accès de maintenance (38) pour insérer les verrouillages manuels.

12. Embrayage et amortisseur de torsion combinés selon la revendication 11, dans lesquels une bobine magnétique (76) est fixée sur le carter fixe d'embrayage (34) pour magnétiser la bague de synchroniseur (32).

13. Embrayage et amortisseur de torsion combinés selon la revendication 2, dans lesquels l'arbre central (26) est creux et formé en acier cémenté.

14. Embrayage et amortisseur de torsion combinés selon la revendication 2, comprenant un dispositif de sécurité contrôlé de manière électrique (102) pour empêcher que l'embrayage ne se mette en prise au-dessus de 1 000 tr/min.
